# EUROPÄISCHE PATENTSCHRIFT

(11) **EP 3 952 319 B1**
(45) Veröffentlichungstag und Bekanntmachung des Hinweises auf die Patenterteilung: **08.07.2026**
(21) Anmeldenummer: 20189281.7
(22) Anmeldetag: 04.08.2020
(51) Int. Cl.: H04Q 9/00, H04W 84/18

(54) **FLEXIBLES SENSOREN-NETZWERK IN EINER IOT-UMGEBUNG**
FLEXIBLE SENSOR NETWORK IN AN IOT ENVIRONMENT
RÉSEAU DE CAPTEURS FLEXIBLE DANS UN ENVIRONNEMENT IOT

(43) Veröffentlichungstag der Anmeldung: 09.02.2022
(73) Patentinhaber: Deutsche Telekom AG, 53113 Bonn (DE)
(72) Erfinder: Dr. Hetzer, Dirk, 12683 Berlin (DE)
(74) Vertreter: karo IP

(56) Entgegenhaltungen:
- DE-A1- 102018 222 376
- DE-U1- 202013 105 224
- KR-A- 20170 047 526
- KR-A- 20200 045 058
- US-A1- 2011 108 721

## Beschreibung

Die vorliegende Erfindung betrifft das technische Gebiet eines Sensoren-Netzwerks sowie ein Verfahren zum Betreiben des Sensoren-Netzwerks, insbesondere betrifft die vorliegende Erfindung ein Sensoren-Netzwerk in einer IoT-Umgebung.

Verschiedene Dienstleister, zu denen auch Netzwerkanbieter wie die Deutsche Telekom gehören können, installieren im Rahmen verschiedener IoT Projekte Sensoren, insbesondere IoT Sensoren, im urbanen Raum. Diese Sensoren werden zumeist fest installiert und haben die Aufgabe Informationen über zuvor fest vorgegebene physikalische Umgebungsparameter zu liefern. So können beispielsweise Sensoren installiert werden, die speziell dazu ausgelegt sind Belegungen eines Parkplatzes zu ermitteln, eine Luftgüte (z.B. Feinstaub) der Umgebung zu messen, bewegte Objekte auf einer Straße wahrzunehmen oder den Verkehrsfluss vor einer Ampel zu messen. Um viele physikalische Parameter eines urbanen Raums zu erfassen, ist also eine erhebliche Anzahl solcher Sensoren nötig, die alle aufwendig installiert, verknüpft und betrieben werden müssen. Selbst mit modernen kostengünstigen Netzanbindungen sind solche Sensornetze deswegen meist sehr komplex und aus diesem Grund sehr kostenintensiv und partiell für die Dienstleister nicht wirtschaftlich sinnvoll nutzbar.

Gängige Praxis ist es daher vielfältige Sensoren zur Bestimmung von urbanen Parametern eigens für die einzelnen Anwendungen und für spezielle Aufgaben zu installieren und zu betreiben.

DE 10 2018 222 376 A1 betrifft ein Sensornetzwerk, in dem Sensoren Sensordaten an einen externen Server übertragen. Der Server berechnet auf Basis der Sensordaten ein Datenverarbeitungsmodell und übermittelt dieses an den Sensor, der das Datenverarbeitungsmodell zur Verarbeitung der Sensordaten anwendet (z. B. zur Effizienzsteigerung).

DE 20 2013 105 224 U1 beschreibt ein Schließsystem mit einer Sensoreinrichtung, die über eine Schließeinrichtung mit einem zentralen Server kommuniziert. Die Sensoreinrichtung ist nicht direkt mit dem Netzwerk verbunden; es werden u. a. Ergebnis-/Statusdaten übertragen und Betriebsparameter zur Reparametrierung bereitgestellt, um Netzwerklast zu reduzieren.

KR 20170047526 A D3 offenbart ein Sensor-Hub-System, bei dem ein Server abhängig von Nutzerattributen bzw. Situation Firmware an ein Sensor-Hub-Gerät überträgt. Das Sensor-Hub-Gerät aktualisiert seine Firmware, um situationsabhängig Funktionen bereitzustellen und Ressourcen (z. B. Speicher/Energie) zu optimieren.

KR 20200045058 A betrifft ein Smart-Factory-Monitoring-System mit mehreren Sensormodulen, Netzwerk und einem KI-basierten Monitoring-Server. Sensor-Knoten können plug-and-play angeschlossen/erkannt werden; Sensordaten werden zur Echtzeitüberwachung und KI-gestützten Auswertung (z. B. Risikoerkennung/Alarmierung) verarbeitet.

US 2011/0108721 A1 beschreibt ein Messgerät für Downhole-Anwendungen (u. a. Spektroskopie/Photometrie) mit optischen Komponenten wie Filtereinheit/Filterrad und einer Steuerschaltung. Die Steuerschaltung steuert die optischen Komponenten und ermöglicht Messbetrieb unter variierenden Bedingungen.

Es ist daher die Aufgabe der Erfindung ein Sensoren-Netzwerk sowie ein entsprechendes Verfahren anzugeben, dass eine effizienteres, insbesondere kostengünstigeres, und flexibleres Betreiben des Sensoren-Netzwerks ermöglicht.

Gelöst wird diese Aufgabe mit den Merkmalen des unabhängigen Anspruchs 1.

Erfindungsgemäß ist ein Sensoren-Netzwerk in einer IoT-Kommunikations-Umgebung angegeben, wobei das Sensoren-Netzwerk umfasst:
- einen Server ausgebildet zur Kommunikation mit zumindest einer Sensoreinheit mittels einer bidirektionalen Kommunikationsverbindung;
- zumindest eine erste Sensoreinheit zur Detektion von physikalischen Daten, wobei die Sensoreinheit umfasst:
   ∘ eine Kommunikationsschnittstelle ausgebildet zur bidirektionalen Kommunikation via der bidirektionalen Kommunikationsverbindung mit einer zweiten Sensoreinheit, dem Server und/oder einer Weiterleitungseinheit,
   ∘ zumindest einen ersten Sensor zur Detektion von physikalischen Daten,
   ∘ einen Prozessor zum Steuern einer Funktionsweise der ersten Sensoreinheit;
   wobei der Prozessor eine Programmierschnittstelle zum Ändern der Funktionsweise der Sensoreinheit aufweist.
Es ist der Kerngedanke der Erfindung, dass es die bidirektionale Kommunikationsverbindung zwischen der Sensoreinheit und dem Server nicht nur ermöglicht, dass die Sensoreinheit die gemessenen physikalischen Parameter dem Server mitteilt, sondern dass der Server auch mit der Sensoreinheit kommuniziert, respektive dieser "Befehle" über die Programmierschnittstelle mitteilen kann. Zusammen mit der Eigenschaft, dass die Sensoreinheit oder die Sensoreinheiten vermittels der Programmierschnittstelle ihre Funktionsweise ändern können, wird hierdurch ermöglicht, dass eine einzige Sensoreinheit respektive ein einziger Detektorkopf für verschiedene Einsatzszenarien genutzt werden kann, indem die Sensoreinheit "umprogrammiert" werden kann - dieselbe Hardware kann also für verschiedene Messungen verwendet werden. Als konkretes Beispiel werden mit einem einzigen Spektrometer als Sensoreinheit verschiedene physikalische Parameter gemessen. Gegebenenfalls muss diese Sensoreinheit nicht nur umprogrammiert, sondern auch hardwaretechnisch auf die neue Messung eingestellt werden - beispielsweise durch kurzzeitiges Erhitzen und/oder eine Änderung der anliegenden Spannungen und/oder Stromstärken. Solche flexible Sensoren können auf einem Galliumnitrid (GaN) /Aluminiumgalliumnitrid(AlGaN)-Quantensensor-Design beruhen.
Dies macht eine Sensoreinheit deutlich flexibler und reduziert somit die Kosten für einen Dienstleister beträchtlich, da die Gesamtanzahl der Sensoren für die Messung von verschiedenen urbanen Parametern deutlich reduziert wird.

Vorzugsweise werden moderne Netzwerktechnologien, wie etwa NB-IoT, CatM und/oder 5G zum Aufbau der bidirektionalen Kommunikationsverbindung verwendet, weil diese mit einem sehr geringen Stromverbrauch betrieben werden können, was die Betriebszeit der Sensoreinheiten deutlich erhöht. Ein weiterer Vorteil, der dem aktuellen Bedarf angepassten Funktionsweise des Sensornetzes, ist die Wertsteigerung des Mobilfunk-Netzes des Dienstleisters.

Indem die Sensoreinheit eine Kommunikationsschnittstelle aufweist, die wahlweise eine bidirektionale Verbindung mit einer zweiten Sensoreinheit, einem Server oder einer Weiterleitungseinheit, wie etwa einem Router, ausbilden kann, besteht die Möglichkeit ein Mesh-Netzwerk zu erzeugen, in dem insbesondere die einzelnen Sensoreinheiten nur über eine geringe Wegstrecke funken müssen, was ihren Stromverbrauch deutlich reduziert. Beispielsweise könnte ein Router an einer leicht zugänglichen Stelle einem Sensor-Netzwerk, das mehrere Sensoreinheit umfasst, zugeordnet sein. Die einzelnen Sensoreinheiten funken dann ihre gemessenen Daten an den Router, welcher seinerseits die Daten an den Server entweder drahtlos oder drahtgebunden sendet. Dies bietet den Vorteil, dass es wesentlich einfacher ist, Batterien bei einer einzelnen Weiterleitungseinheit auszutauschen oder diese an eine Stromversorgung anzuschließen.

Der Sensor ist also eingerichtet, um verschiedene physikalische Parameter respektive Daten zu erfassen und/oder um einen vorgegebenen physikalischen Parameter in einer geänderten Art und Weise zu messen. War die Sensoreinheit beispielsweise initial dazu vorgesehen einmal am Tag die Luftqualität zu messen und es sich herausstellt, dass dieses Zeitintervall zu lange festgelegt war, wird durch die erfindungsgemäße Lösung ermöglicht, dass die Sensoreinheit umprogrammiert werden kann, um beispielsweise einmal stündlich die Luftqualität zu messen. Insbesondere kann für die Messung verschiedener physikalischer Parameter ein Detektorkopf an dem Sensor vorgesehen sein, der eine Mehrzahl von Sensor-Komponenten aufweisen und/oder eine schon vorhandene Sensor-Komponente wird gezielt umprogrammiert, wobei die Verwendung verschiedener Sensor-Komponenten genutzt werden kann, um "sehr" verschiedene physikalische Parameter detektieren können, die einer einzigen umprogrammierbaren Senor-Komponente nicht zugänglich sind. Beispielsweise kann eine erste Sensor-Komponente ein Bewegungsdetektor sein, während eine zweite Sensor-Komponente ein Luftqualitätsdetektor ist. Dies ermöglicht vorteilhaft, dass die Sensoreinheiten sind nicht mehr nur auf einen zuvor festgelegten Anwendungsfall beschränkt sind.

Erfindungsgemäss ist der Server ausgebildet, Programmcode vermittels der bidirektionalen Kommunikationsverbindung an die Programmierschnittstelle zu übertragen.

Dies bietet den Vorteil, dass der Dienstleister zentral über den Server die Funktionsweise der einzelnen Sensoreinheiten ändern kann. Für die Dienstleister besteht hierbei die Möglichkeit die Funktionsweise nur einzelner Sensoreinheiten oder aber alle Sensoreinheiten, die das Sensoren-Netzwerk ausbilden umzuändern. Um einzelnen Sensoreinheiten gezielt Programmcode übermitteln zu können, ist auf dem Server eine Datenbank mit eindeutigen Identitätsinformationen der jeweiligen Sensoreinheiten hinterlegt. Indem die Funktionsweise der Sensoreinheiten mittels eines Programmcodes geändert wird, werden die Sensoreinheiten "dauerhaft" - bis erneut ein neuer Programmcode gesendet wird - umprogrammiert. Dies ist deutlich effizienter als wenn der Server die Funktionsweise der Sensoreinheiten dadurch ändert, indem er anlassbezogen jedes Mal einen neuen Steuerbefehl an die Sensoreinheiten überträgt.

Zweckmäßigerweise ist der Server ausgebildet, die Sensordaten von zumindest einer Mehrzahl von Sensoreinheiten zu verwalten und zu analysieren.

Dies bietet zum einen den Vorteil, dass der Stromverbrauch der Sensoreinheiten dadurch reduziert wird, indem ihnen die Rechenleistung zu Analyse der Sensordaten von dem Server abgenommen wird. Ein anderer Vorteil ist, dass die Analyse der gesammelten Daten einen umfassenderen Überblick bezüglich der zu untersuchenden urbanen Situation, z.B. Parkplatzbelegung, ermöglicht. Eine weitere Folge ist, dass auch statistische Unsicherheiten durch eine erhöhte Datenmenge reduziert werden können.

Erfindungsgemäss laufen auf dem Server Verfahren der künstlichen Intelligenz, die ausgebildet sind, die Programmierung der Sensoren dynamisch an die Aufgabenstellung anzupassen. Dabei können Verfahren wie Deep Learning / Reinforcement Learning zu Einsatz kommen.

Dies bietet den Vorteil, dass automatisiert die Funktionsweise einer einzelnen oder mehrerer Sensoreinheiten verändert werden kann, wobei der Programmcode basierend auf der Analyse einer einzelnen Sensoreinheit oder einer Mehrzahl von Sensoreinheiten erstellt werden kann. Beispielsweise kann der Server durch eine Analyse feststellen, dass die Frequenz einer Datenerhebung nicht ausreichend ist, um geeignete Feststellungen über eine urbane Situation treffen zu können. Hierauf kann der Server ein Programmcode erstellen, der die die Frequenz Datenaufnahme der Sensoreinheiten erhöht. Eine weitere Möglichkeit ist, dass der Server einen Programmcode erstellt, der den Stromverbrauch der Sensoreinheiten optimiert. Ferner ist es eine Möglichkeit, eine andere Sensoren-Komponente hinzu zu schalten oder abzuschalten. Hierdurch wird ermöglicht, dass beispielsweise zu dem Bewegungsdetektor, ein Luftverschmutzungsdetektor hinzu geschaltet wird.

Im Rahmen der Erfindung ist es auch möglich, dass ein Programmcode zusätzlich gezielt von einem Programmierer erstellt und an die Sensoreinheiten vermittels der Kommunikationsverbindung übertragen wird. Hierdurch kann die Funktionsweise einer Sensoreinheit gezielt auf eine ganz individuelle Art geändert werden, die nicht im Funktionsumfang der künstlichen Intelligenz vorgesehen ist. Die jeweiligen Programmcodes können einen "Tag" aufweisen, der spezifiziert, ob dieser Programmcode abgeändert werden darf, nicht abgeändert werden darf oder von wem er abgeändert werden darf.

In einer Ausführungsform ist der Server ausgebildet, basierend auf den an ihn übermittelten Sensordaten, Steuerbefehle an externe Aktoren zu versenden, die mit dem Kommunikationsnetzwerk in Verbindung stehen.

Bei dem Kommunikationsnetzwerk kann es sich insbesondere um das Internet handeln. Beispielsweise können mit diesem Kommunikationsnetzwerk Signalvorrichtungen verbunden sein, die auf die Steuerbefehle des Servers reagieren. Aufgrund der von den Sensoreinheiten übermittelten Messdaten kann der Server beispielsweise ermitteln, wie eine Ampel oder mehrere Ampeln am besten geschaltet werden müssen, um einen ungehinderten Verkehrsfluss zu ermöglichen. Durch die Auswertung von Messungen eines Luftverschmutzungsdetektors, kann signalisiert werden, dass der Zutritt von bestimmten Bereichen bei hoher Schadstoffbelastung zu vermeiden oder verboten ist.

Zweckmäßigerweise umfassen die bidirektionalen Kommunikationsverbindungen drahtlose Funkverbindungen und/oder kabelgebundene Verbindungen.

Dies bietet den Vorteil, dass bei einem Einbau der Sensoreinheiten in dem Sensoren-Netzwerk nicht für jede Sensoreinheit, oder sogar für gar keine Sensoreinheit, eine aufwändige kabelgebundene Verbindung bereitgestellt werden muss. Die einzelnen Sensoreinheiten können also via drahtloser Funkverbindung untereinander und gegebenenfalls auch mit dem Server kommunizieren und dadurch ein sogenanntes Mesh-Netz aufbauen. Moderne Kommunikationsstandards wie 5G erlauben allerdings auch ein effizientes Betreiben eines Sensoren-Netzwerks ohne die Verwendung eines Mesh-Netzs. Eine speziell ausgewählte Sensoreinheit des Sensoren-Netzwerks oder aber eine eigens hierfür vorgesehene Weiterleitungseinheit, wie etwa ein Router, kann die einzelnen per Funk übertragenen Sensordaten der jeweiligen Sensoreinheiten kabelgebunden oder per Funk in das Kommunikationsnetzwerk weiterleiten, wodurch diese an den Server gelangen.

Dies bietet den Vorteil, dass alle Sensoreinheiten, bis auf die speziell ausgewählte Sensoreinheit, ihre gesammelten Sensordaten nur über eine kurze Strecke funken müssen, wodurch ihr Stromverbrauch reduziert wird. Die speziell ausgewählte Sensoreinheit oder die Weiterleitungseinheit kann, wenn notwendig, an eine eigens hierfür vorgesehene Stromversorgung angeschlossen werden. Diese Anordnung reduziert in erheblicher Art den Installationsaufwand des Sensoren-Netzwerks. Gemäß einer vorteilhaften Ausführungsform basieren die drahtlose Funkverbindungen auf einem energiesparsamen Standard.

Dies bietet den Vorteil, dass der Energieverbrauch der Sensoreinheiten weiter reduziert wird. Bei dem energiearmen Standard kann es sich um NBlot, CatM, 5G und/oder LPWA handeln. Ein Low Power Wide Area Network (LPWAN) beschreibt eine Klasse von Netzwerkprotokollen zur Verbindung von Niedrigenergiegeräten wie batteriebetriebene Sensoren mit einem Netzwerkserver. Das Protokoll ist so ausgelegt, dass eine große Reichweite und ein niedriger Energieverbrauch der Endgeräte bei niedrigen Betriebskosten erreicht werden können.

Die Sensoreinheiten weisen zweckmäßigerweise einen Sensorelement-Adapter für einen Sensor-Kopf auf.

Dies bietet den Vorteil, dass verschiedene Sensor-Komponenten auf einfache Art der Sensoreinheit zur Verfügung gestellt werden können, wenn eine einzige umprogrammierbare Sensor-Komponente nicht ausreichend ist. Weist beispielsweise eine Sensoreinheit nur einen Bewegungsmelder in ihrem Sensor-Kopf auf, so kann dieser Sensor-Kopf abgenommen und durch einen anderen Sensor-Kopf ersetzt werden, der vermittels des Sensorelement-Adapters an der Sensoreinheit eingebracht wird. Der andere Sensor-Kopf kann beispielsweise einen Luftverschmutzungsdetektor aufweisen. Die Funktionsweise der Sensoreinheit wird an den Luftverschmutzungsdetektor wie vorstehend beschrieben angepasst, indem der Sensoreinheit über die Programmierschnittstelle ein neuer Programmcode überspielt wird, der die Funktionsweise der Sensoreinheit an den Luftverschmutzungsdetektor abändert. Wie vorstehend schon erläutert, indem der Sensoreinheit über die Programmierschnittstelle ein neuer Programmcode überspielt wird kann auch eine "einzige" Sensor-Komponente gezielt umprogrammiert werden, um gezielt andere physikalische Parameter zu messen.

Prinzipiell ist es möglich, dass die Sensoreinheit vermittels einer angebunden Stromversorgung oder durch eine Batterieeinheit betrieben wird. Da insbesondere IoT-Sensoren flexibel und zahlreich an vielen Stellen eingebaut werden, ist eine angebundene Stromversorgung in den meisten Fällen nicht praktikabel, sodass die Variante einer Stromversorgung durch eine Batterieeinheit zumeist vorgezogen wird.

Eine solche Batterieeinheit hat allerdings eine begrenzte Lebensdauer, sodass zusätzlich zu der Batterieeinheit eine Energieerzeugungseinheit in der Sensoreinheit vorgesehen sein kann. Befindet sich die Sensoreinheit beispielsweise im Freien, kann als Energieerzeugungseinheit ein Solarmodul vorgesehen sein, das die Batterieeinheit mit Energie speist. Befindet sich die Sensoreinheit beispielsweise unter einer Straße, kann als Energieerzeugungseinheit ein Piezo-Element verwendet werden, welches Energie durch Druckänderungen, die beispielsweise von Autos auf der Straße verursacht werden, erzeugt.

Gemäß einem weiteren Aspekt der Erfindung ist ein Verfahren zum Betreiben eines vorstehend beschriebenen Sensoren-Netzwerks in einer IoT-Kommunikations-Umgebung angegeben, wobei der Server vermittels der bidirektionalen Kommunikationsverbindung der Programmierschnittstelle der Sensoreinheit Programmcode zum Ändern der Funktionsweise der Sensoreinheit aufweist.

Die Vorteile dieses Verfahrens entsprechen im Wesentlichen den vorstehend beschriebenen Vorteilen im Zusammenhang mit dem Sensoren-Netzwerk.

Im Folgenden werden bevorzugte Ausführungsbeispiele der vorliegenden Erfindung unter Bezugnahme auf die begleitende Figur erläutert:

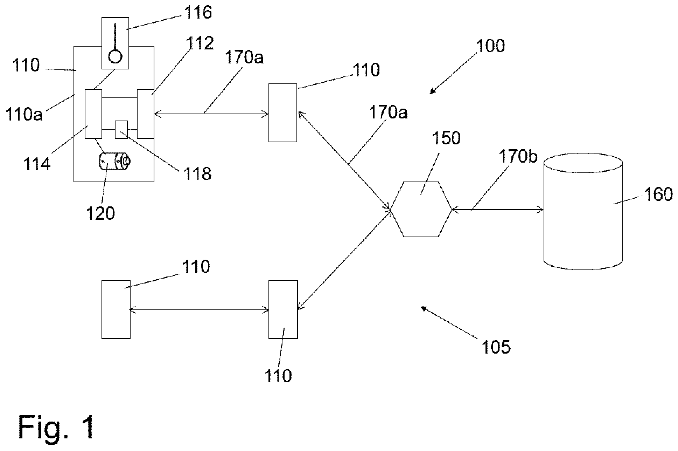

- Fig. 1:: zeigt ein effizientes und flexibles Sensoren-Netzwerk in einer IoT-Umgebung.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

Fig. 1 zeigt ein effizientes und flexibles Sensoren-Netzwerk 100 in einer IoT-Umgebung.

Das Sensoren-Netzwerk 100 umfasst eine Mehrzahl an Sensoreinheiten 110, eine Weiterleitungseinheit 150 und einen Server 160, wobei die Sensoreinheiten 110, die Weiterleitungseinheit 150 und der Server 160 miteinander durch eine bidirektionale Verbindung 170 miteinander in Kontakt stehen und Daten austauschen können und zusammen ein Kommunikationsnetz 105 ausbilden. Bei der bidirektionalen Verbindung 170 kann es sich um eine Funkverbindung oder um eine drahtgebundene Verbindung handeln. Bevorzugt sind die Sensoreinheiten 110 untereinander und mit der Weiterleitungseinheit 150 mit einer Funkverbindung 170a verbunden, wohingegen die Weiterleitungseinheit 150 mit dem Server 160 vermittels einer drahtgebundenen Verbindung 170b verbunden ist. Bei der Weiterleitungseinheit 150 kann es sich auch um eine Basisstation handeln, die den Zugang zu einem Kommunikationsnetz, insbesondere dem Internet, eines Netzwerkproviders ermöglicht.

Eine der Sensoreinheiten 110a ist im Detail dargestellt. Die Sensoreinheiten 110 weisen eine Kommunikationsschnittstelle 112 auf mit welcher Daten mit dem Kommunikationsnetz 105 ausgetauscht werden können. Ein Prozessor 114 der Sensoreinheit 110 kann über seinen Sensor 116 gemessene Daten über die Kommunikationsschnittstelle 112 an den Server 160 weiterleiten. Soll die Funktionsweise einer der Sensoreinheiten 110 geändert werden, so kann von dem Server 110 über die bidirektionalen Verbindungen 170 Programmcode an die Kommunikationsschnittstelle 112 der Sensoreinheit 110 gesendet werden. Dieser Programmcode wird von der Kommunikationsschnittstelle 112 an einer Programmierschnittstelle 118 weitergeleitet, die den Programmcode automatisiert auf den Prozessor 114 der Sensoreinheit implementiert. Nach der Implementierung des neuen Programmcodes kann die Sensoreinheit mit einer abgeänderten Funktionsweise arbeiten. Zudem weist die Sensoreinheit eine Batterieeinheit 120 auf.

Der entsprechende Programmcode kann von einer auf dem Server 160 implementierten künstlichen Intelligenz erstellt werden. Die künstliche Intelligenz auf dem Server 160 kann beispielsweise bei einer Analyse der gesammelten Sensordaten der Sensoreinheit 110 feststellen, dass Messeraten geändert werden müssen und/oder andere Sensor-Komponenten aktiviert werden sollen.

Dies soll an einem Beispiel illustriert werden: In der Sensoreinheit 110 sind zumindest zwei verschiedene Sensor-Komponenten angebracht, wobei eine erste Sensor-Komponente ausgebildet ist physikalische Parameter einer ersten Art zu messen und eine zweite Sensor-Komponente ausgebildet ist physikalische Parameter einer zweiten Art zu messen. Als nicht einschränkendes Beispiel wird zur besseren Veranschaulichung angenommen, dass die erste Sensor-Komponente ein Bewegungsdetektor und die zweite Sensor-Komponente ein Luftverschmutzungsdetektor ist.

Häufig ist es nicht wünschenswert, dass die Sensoreinheit 110, obwohl sie beide Sensor-Komponenten aufweist, die entsprechenden Daten mit einer hohen Frequenz misst und übermittelt, da dies die Batterielaufzeit der Sensoreinheit reduzieren würde. Durch die Kommunikation mit dem Server 160 ist es aber nun möglich zielgerichtet adaptiv auf geänderte Umgebungsbedingungen zu reagieren und die Messungen der Sensoreinheiten 110 entsprechend anzupassen.

Angenommen die Sensoreinheit 110a ist prinzipiell vorgesehen, um Bewegungen zu detektieren und ein entsprechendes Feedback zur Steuerung eines Verkehrsflusses an eine Ampel zu übermitteln, die Sensoreinheit 110a ist aber technisch auch in der Lage Luftverschmutzungen zu messen.

Ein vor allem in Städten häufig auftretendes Phänomen ist, dass die Luftverschmutzung überwacht werden muss. Es ist bekannt, dass die Luftverschmutzung insbesondere an vielbefahrenen Straßen hohe Werte annehmen kann. Diese Straßen sind dann mit Sensoreinheiten 110 bestückt, die initial dafür vorgesehen sind die Luftverschmutzung zu messen. Interessant ist häufig in dieser Hinsicht, wie sich die Luftverschmutzungen über das Stadtgebiet ausbreiten.

Es wäre jedoch oft ein wirtschaftlich unverhältnismäßig hoher Aufwand überall in der Stadt eigens hierfür vorgesehene Sensoreinheiten 110 vorzusehen, die eigens dafür vorgesehen sind, Luftverschmutzungswerte mit einer hohen Frequenz der Datenaufnahme anzubringen.

Dem Server 160 können beispielsweise, ebenfalls durch entsprechende ausgebildete Sensoreinheiten 110, Informationen über aktuelle Windrichtung und Windstärken zur Verfügung gestellt werden. Die künstliche Intelligenz des Servers 160 kann diese Information analysieren und ausrechnen, in welche Richtung die durch Abgase erzeugte Feinstaubpartikel geweht werden. Sind auf dem Server 160 örtliche Positionen der Sensoreinheiten 110a hinterlegt, so kann die künstliche Intelligenz des Servers 160 gezielt den Sensoreinheiten 110a die in Richtung der Windrichtung liegen einen Programmcode über das Kommunikationsnetz 105 zu spielen, der deren Funktionsweise ändert, sodass die Sensoreinheiten 110a alternativ oder zusätzlich zu der Bewegungsdetektion Daten über die Luftverschmutzung ermitteln.

In gleicher Weise ist es möglich, Messraten adaptiv auf die Umgebung anzupassen. Die künstliche Intelligenz auf dem Server 160 kann anhand der übermittelten Daten abschätzen, ob eine Erhöhung oder eine Erniedrigung der Messraten zu einer bestimmten Uhrzeit sinnvoll ist und ein Programmcode erstellen, der die Sensoreinheiten 110 entsprechend steuert. Beispielsweise kann die Erfassung eines Verkehrsflusses zur Mitternacht mit einer niedrigeren Frequenz stattfinden als im Berufsverkehr.

Die künstliche Intelligenz kann auch Steuern, welche Art der Messung priorisiert werden soll.

Ein weiteres Beispiel: im Innenstadtbereich werden Bodensensoren 110 eingebracht, die verschiedene Messaufgaben sequenziell erfüllen sollen. Diese Bodensensoren 110 sind für eine Verkehrsmessung (Fußgänger, Radfahrer, Pkw, Lkw), eine Messung der Luftqualität (Feinstaub, NOx, SOx), eine Messung von organischen Bestandteilen der Luft (Pollen, Viren, etc.) ausgebildet. Das Sensoren-Netzwerk 100 kann nun so adaptiert werden, dass bei hoher Verkehrsbelastung (zum Beispiel im Berufsverkehr) die Messung von Pollen unterdrückt wird, da die Ergebnisse im Berufsverkehr aufgrund der hohen Schadstoffe nicht sinnvoll ausgewertet werden können. Im Gegenzug wird die Genauigkeit der Verkehrsmessung erhöht. Zu anderen Zeiten kann die Pollenbelastung entsprechend genauer bestimmt werden, z.B. im Frühjahr oder im Sommer oder wenn wenig Verkehr vorhanden ist.

## Patentansprüche

1. Sensoren-Netzwerk in einer IoT-Kommunikations-Umgebung, wobei das Sensoren-Netzwerk (100) umfasst:
• einen Server (160) ausgebildet zur Kommunikation mit zumindest einer Sensoreinheit (110) mittels einer bidirektionalen Kommunikationsverbindung (170);
• zumindest eine erste Sensoreinheit (110) zur Detektion von physikalischen Daten, umfassend
∘ eine Kommunikationsschnittstelle (112) ausgebildet zur bidirektionalen Kommunikation via der bidirektionalen Kommunikationsverbindung (170) mit einer zweiten Sensoreinheit und/oder dem Server (160),
∘ zumindest einen ersten Sensor (116) zur Detektion von physikalischen Daten,
∘ einen Prozessor (114) zum Steuern einer Funktionsweise der ersten Sensoreinheit (110),
wobei der Prozessor (114) eine Programmierschnittstelle (118) zum Ändern der Funktionsweise der Sensoreinheit (110) aufweist,
wobei der Server (160) ausgebildet ist, Programmcode vermittels der bidirektionalen Kommunikationsverbindung (170) an die Programmierschnittstelle (118) zu übertragen,
wobei der Server (160) ausgebildet ist, die Sensordaten von zumindest einer Mehrzahl von Sensoreinheiten (110) zu analysieren,
wobei auf dem Server (160) eine künstliche Intelligenz implementiert ist, die ausgebildet ist, den Programmcode zu erstellen,
wobei die künstliche Intelligenz ausgebildet ist, den Programmcode basierend auf einer Auswertung der Sensordaten der Mehrzahl von Sensoreinheiten (110) zu erstellen,
**dadurch gekennzeichnet, dass**
die erste Sensoreinheit (110) einen Sensorelement-Adapter für einen austauschbaren Sensor-Kopf aufweist, und wobei die Funktionsweise der Sensoreinheit (110) an den Sensor-Kopf dadurch angepasst wird, dass der Sensoreinheit (110) über die Programmierschnittstelle (118) ein neuer Programmcode überspielt wird, der die Funktionsweise der Sensoreinheit (110) abändert.

2. Sensoren-Netzwerk nach einem der vorherigen Ansprüche, **dadurch**
**gekennzeichnet, dass** der Server (160) ausgebildet ist, basierend auf den an ihn übermittelnden Sensordaten, Steuerbefehle an externe Aktoren zu versenden, die mit einem Kommunikationsnetzwerk (105) in Verbindung stehen, wobei der Server (160) ebenfalls mit dem Kommunikationsnetzwerk (105), insbesondere dem Internet, in Verbindung steht.

3. Sensoren-Netzwerk nach einem der vorherigen Ansprüche, **dadurch gekennzeichnet, dass** die bidirektionale Kommunikationsverbindung (170) drahtlose Funkverbindungen und/oder kabelgebundene Verbindungen umfasst.

4. Sensoren-Netzwerk nach Anspruch 3, **dadurch gekennzeichnet**, die drahtlosen Funkverbindungen auf einem energiesparsamen Standard basieren.

5. Sensoren-Netzwerk nach einem der vorherigen Ansprüche, **dadurch**
**gekennzeichnet, dass** die erste Sensoreinheit eine Energieerzeugungseinheit aufweist.

## Claims

1. **Sensor** network in an loT communication environment, wherein the sensor network (100) comprises:
• a server (160) configured to communicate with at least one sensor unit (110) by means of a bidirectional communication connection (170);
• at least one first sensor unit (110) for detecting physical data, comprising
∘ a communication interface (112) configured for bidirectional communication via the bidirectional communication connection (170) with a second sensor unit and/or the server (160),
∘ at least one first sensor (116) for detecting physical data,
∘ a processor (114) for controlling an operation of the first sensor unit (110),
wherein the processor (114) has a programming interface (118) for changing the operation of the sensor unit (110),
wherein the server (160) is configured to transmit program code to the programming interface (118) by means of the bidirectional communication connection (170),
wherein the server (160) is configured to analyze the sensor data from at least a plurality of sensor units (110),
wherein an artificial intelligence is implemented on the server (160), said artificial intelligence being configured to generate the program code,
wherein the artificial intelligence is configured to generate the program code based on an evaluation of the sensor data of the plurality of sensor units (110),
**characterized in that**
the first sensor unit (110) comprises a sensor element adapter for an exchangeable sensor head, and wherein the operation of the sensor unit (110) is adapted to the sensor head **in that** new program code is loaded onto the sensor unit (110) via the programming interface (118), said new program code modifying the operation of the sensor unit (110).

2. Sensor network according to one of the preceding claims, **characterized in that** the server (160) is configured, based on the sensor data transmitted to it, to send control commands to external actuators that are connected to a communication network (105), wherein the server (160) is likewise connected to the communication network (105), in particular the Internet.

3. Sensor network according to one of the preceding claims, **characterized in that** the bidirectional communication connection (170) comprises wireless radio connections and/or wired connections.

4. Sensor network according to claim 3, **characterized in that** the wireless radio connections are based on an energy-saving standard.

5. Sensor network according to one of the preceding claims, **characterized in that** the first sensor unit comprises an energy generation unit.

## Revendications

1. Réseau de capteurs dans un environnement de communication IoT, le réseau de capteurs (100) comprenant :
• un serveur (160) conçu pour communiquer avec au moins une unité de capteur (110) au moyen d'une connexion de communication bidirectionnelle (170) ;
• au moins une première unité de capteur (110) pour détecter des données physiques, comprenant
∘ une interface de communication (112) conçue pour une communication bidirectionnelle, via la liaison de communication bidirectionnelle (170), avec une deuxième unité de capteur et/ou le serveur (160),
∘ au moins un premier capteur (116) pour détecter des données physiques,
∘ un processeur (114) pour commander le fonctionnement de la première unité de capteur (110),
le processeur (114) comportant une interface de programmation (118) pour modifier le fonctionnement de l'unité de capteur (110),
le serveur (160) étant conçu pour transmettre un code programme à l'interface de programmation (118) par l'intermédiaire de la liaison de communication bidirectionnelle (170),
le serveur (160) étant conçu pour analyser les données de capteurs provenant d'au moins une pluralité d'unités de capteurs (110),
une intelligence artificielle étant mise en œuvre sur le serveur (160), laquelle est conçue pour créer le code programme,
l'intelligence artificielle étant conçue pour créer le code programme sur la base d'une évaluation des données de capteurs provenant de la pluralité d'unités de capteurs (110),
**caractérisé en ce que** la première unité de capteur (110) comporte un adaptateur d'élément capteur pour une tête de capteur interchangeable, et dans lequel le fonctionnement de l'unité de capteur (110) est adapté à la tête de capteur par le fait qu'un nouveau code programme, qui modifie le fonctionnement de l'unité de capteur (110), est transmis à l'unité de capteur (110) via l'interface de programmation (118).

2. Réseau de capteurs selon l'une quelconque des revendications précédentes, **caractérisé en ce que** le serveur (160) est conçu pour envoyer, sur la base des données de capteur qui lui sont transmises, des ordres de commande à des actionneurs externes qui sont en liaison avec un réseau de communication (105), le serveur (160) étant également en liaison avec le réseau de communication (105), en particulier l'Internet.

3. Réseau de capteurs selon l'une quelconque des revendications précédentes, **caractérisé en ce que** la liaison de communication bidirectionnelle (170) comprend des liaisons radio sans fil et/ou des liaisons câblées.

4. Réseau de capteurs selon la revendication 3, dans lequel les liaisons radio sans fil sont basées sur une norme à faible consommation d'énergie.

5. Réseau de capteurs selon l'une quelconque des revendications précédentes, **caractérisé en ce que** la première unité de capteur comporte une unité de production d'énergie.
